# EUROPEAN PATENT APPLICATION

(11) **EP 2 100 942 A1**
(43) Date of publication of application: **16.09.2009**
(21) Application number: 09153759.7
(22) Date of filing: 26.02.2009
(51) Int. Cl.: C09K 11/54, C09K 11/57, C09K 11/59, C09K 11/79, C09K 11/80, C09K 11/83, H01J 17/49

(54) **Plasma display panel including phosphor layers having zeta potentials of the same polarity**

(30) Priority: 07.03.2008 KR 20080021560
(71) Applicant: Samsung SDI Co., Ltd., Gyeonggi-do (KR)
(72) Inventor: Park, Do-Hyung, Gyeonggi-do (KR); Kim, Yoon-Chang, Gyeonggi-do (KR); Lee, Young-Hun, Gyeonggi-do (KR); Choi, Ick-Kyu, Gyeonggi-do (KR); Song, Mi-Ran, Gyeonggi-do (KR); Park, Kyu-Chan, Gyeonggi-do (KR); Lee, Hyun-Deok, Gyeonggi-do (KR); Kim, Ji-Hyun, Gyeonggi-do (KR); Song, Yu-Mi, Gyeonggi-do (KR); Kim, Min-Ju, Gyeonggi-do (KR); Song, Jay-Hyok, Gyeonggi-do (KR)
(74) Representative: Perkins, Dawn Elizabeth

(57) **Abstract**

A plasma display panel including phosphor layers having zeta potentials of the same polarity. In one embodiment, the phosphor layers have positive zeta potentials and have a uniform discharge characteristic and a uniform lifetime, and an address discharge of the plasma display panel can be easily caused, and damage on phosphor layers of the plasma display panel due to positive charges during a sustain discharge of the plasma display panel can be reduced.

## Description

The present invention relates to a plasma display panel including a plurality of phosphor layers including a plurality of phosphors and disposed in a plurality of discharge cells.

Plasma display panels are self-emission panels. Plasma display panels include phosphor layers including phosphors that emit light when an energy (or a predetermined energy) is supplied. Specifically, to realize a full color image, a plasma display panel includes phosphor layers including phosphors for emitting light of different colors and disposed in respective discharge cells.

However, the phosphor layers including the phosphors positioned in a conventional plasma display panel have different discharge characteristics from each other, and thus, the level of energy, which is provided to the phosphor layers to emit light, varies. Such a problem affects the phosphor layers including the phosphors in terms of a decrease in reliability due to different discharge voltages and different lifetimes, as found by the applicant of the present application.

An aspect of an embodiment of the present invention is directed toward a plasma display panel including a plurality of phosphor layers having a uniform discharge voltage and a uniform lifetime.

According to an embodiment of the present invention, there is provided a plasma display panel including: first and second substrates facing each other; barrier ribs dividing a discharge space between the first and second substrates to form a plurality of discharge cells; pairs of scan and sustain electrodes to which a voltage is alternatively applied to cause a sustain discharge in the discharge cells; address electrodes for causing an address discharge together with the scan electrodes in the discharge cells; a phosphor layer positioned in each of the discharge cells; and a discharge gas filled in the discharge cells, wherein the phosphor layers positioned in the discharge cells have zeta potentials of the same polarity.

In the plasma display panel according to the present invention, the same polarity may be a positive polarity.

In the plasma display panel according to the present invention, the phosphor layer in each of the discharge cells may be disposed above the address electrodes.

In the plasma display panel according to the present invention, the address discharge may be performed by applying a positive voltage to the address electrodes and applying a negative voltage to the scan electrodes.

In the plasma display panel according to the present invention, the phosphor layer in each of the discharge cells may be exposed to the sustain discharge.

In the plasma display panel according to one embodiment of the present invention, the discharge cells include: a first discharge cell in which a green phosphor layer for emitting green light is positioned, a second discharge cell in which a blue phosphor layer for emitting blue light is positioned, and a third discharge cell in which a red phosphor layer for emitting red light is positioned.

In the plasma display panel according to one embodiment of the present invention, the green, blue and red phosphor layers have zeta potentials of the same polarity by controlling the type or content of metal oxide coated on or mixed with a phosphor material.

According to another embodiment of the present invention, there is provided a plasma display panel including: first and second substrates facing each other; a plurality of barrier ribs dividing a discharge space between the first and second substrates to form a plurality of discharge cells; pairs of scan and sustain electrodes to which a voltage is alternatively applied to cause a sustain discharge in the discharge cells; a plurality of address electrodes for causing an address discharge together with the scan electrodes in the discharge cells; a plurality of phosphor layers in the discharge cells, wherein at least one phosphor layer of the plurality of phosphor layers is positioned in each of the discharge cells, wherein a plurality of phosphors are in the plurality of phosphor layers, wherein at least one phosphor of the plurality of phosphors is included in each of the phosphor layers, and wherein the plurality of phosphors have zeta potentials of the same polarity.

In one embodiment, the phosphors have zeta potentials of the positive polarity. The at least one phosphor layer in each of the discharge cells may be above the address electrodes. The address discharge occurs when a positive voltage may be applied to the address electrodes and a negative voltage may be applied to the scan electrodes. The at least one phosphor layer in each of the discharge cells may be exposed to the sustain discharge.

In one embodiment, the discharge cells include: a first discharge cell in which a green phosphor layer comprises a green phosphor for emitting green light is positioned, a second discharge cell in which a blue phosphor layer comprises a blue phosphor for emitting blue light is positioned, and a third discharge cell in which a red phosphor layer comprises a red phosphor for emitting red light is positioned. The green, blue and red phosphors may have zeta potentials of the same polarity by controlling the type or content of metal oxide coated on or mixed with a phosphor material.

The accompanying drawings, together with the specification, illustrate exemplary embodiments of the present invention, and, together with the description, serve to explain the principles of the present invention.
FIG. 1 is an exploded perspective schematic view of a plasma display panel according to an embodiment of the present invention;
FIG. 2 is a timing diagram illustrating a method of driving a plasma display panel according to an embodiment of the present invention; and
FIG. 3 is a cross-sectional schematic view of a plasma display panel to explain discharging in section (a) of FIG. 2; and
FIG. 4 is a cross-sectional schematic view of a plasma display panel to explain discharging in section (b) of FIG. 2.

In the following detailed description, only certain exemplary embodiments of the present invention are shown and described, by way of illustration. As those skilled in the art would recognize, the invention may be embodied in many different forms and should not be construed as being limited to the embodiments set forth herein. Like reference numerals designate like elements throughout the specification.

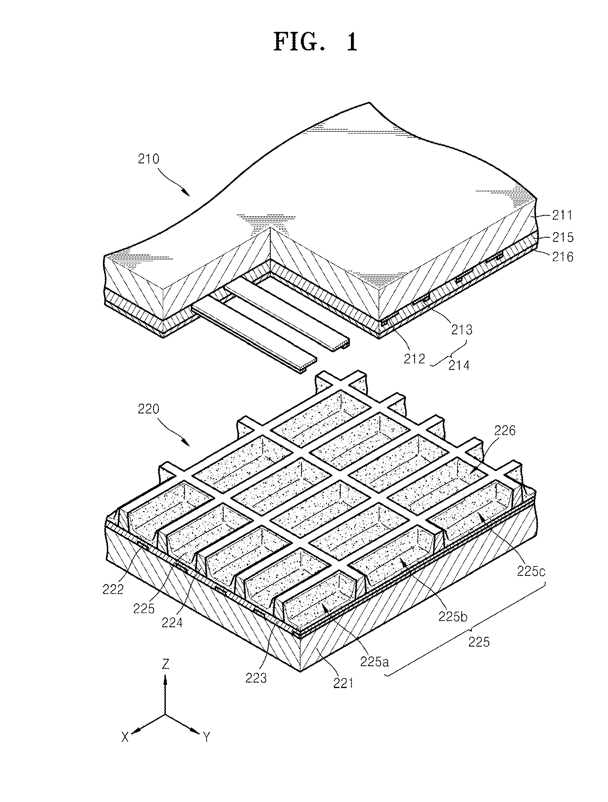

FIG. 1 is an exploded perspective schematic view of a plasma display panel according to an embodiment of the present invention. The current embodiment will be described with reference to a three-electrode surface discharge plasma display panel. However, the plasma display panel according to the present invention is not limited to the structure described in the current embodiment. That is, the present invention can be any plasma display panel in which a discharge space is divided, and a plurality of phosphor layers are positioned therein. In other words, the present invention can be applied to any plasma display panel in which a plurality of phosphor layers are individually disposed.

Referring to FIG. 1, the plasma display panel according to the current embodiment of the present invention includes a front panel 210 and a rear panel 220.

The front panel 210 includes a first substrate 211, pairs 214 of scan electrodes and 212 and sustain electrodes 213 disposed horizontally on the first substrate 211, a first dielectric layer 215 covering the pairs 214, and a protective layer 216 on the first dielectric layer 215.

The rear panel 220 includes a second substrate 221 disposed to face the first substrate 211, a plurality of address electrodes 222 disposed to cross the pairs 214 of scan electrodes and 212 and sustain electrodes 213 on the second substrate 221, a second dielectric layer 223 covering the address electrodes 222, and barrier ribs 224 disposed in a matrix arrangement on the second dielectric layer 223.

When the front panel 210 is combined with the rear panel 220, a lower portion of the barrier ribs 224 contacts the second dielectric layer 223 and an upper portion of the barrier ribs 224 contacts the first dielectric layer 215. Therefore, the barrier ribs 224 divide a discharge space between the first substrate 211 and the second substrate 221 to form a plurality of discharge cells 226. According to the current embodiment, the barrier ribs 224 are disposed in a matrix arrangement and thus each of the discharge cells 226 is rectangular.

However, the inner structure of the plasma display panel, such as the discharge cells or electrodes, is not limited to the structure as described above. The present invention can be applied to any plasma display panel that includes a plurality of phosphor layers individually disposed.

A phosphor layer 225 is disposed in the discharge cells 226. In the current embodiment, the phosphor layer 225 may include three types of phosphor layers, specifically a red phosphor layer 225a, a green phosphor layer 225b, and a blue phosphor layer 225c.

According to the current embodiment, the red phosphor layer 225a may include (Y,Gd)BO₃:Eu or Y(V,P)O₄:Eu acting as a red phosphor, and the blue phosphor layer 225c may include BaMgAl₁₀O₁₇:Eu or CaMgSi₂O₆:Eu acting as a blue phosphor. The red phosphor layer 225a including (Y,Gd)BO₃:Eu or Y(V,P)O₄:Eu and the blue phosphor layer 225c including BaMgAl₁₀O₁₇:Eu or CaMgSi₂O₆:Eu have a zeta potential of about +40mV, that is, a positive zeta potential.

However, Zn₂SiO₄:Mn, which is a phosphor material used to form the green phosphor layer 225b including a green phosphor according to the current embodiment, has a negative zeta potential. Therefore, the green phosphor layer 225b used in the current embodiment includes a green phosphor prepared by mixing and coating Zn₂SiO₄:Mn with a metal oxide selected from the group consisting of MgO, SrO, CaCO₃, BaCO₃, La₂O₃, and a mixture thereof. To obtain a positive zeta potential, ZnO is not used because Zn₂SiO₄:Mn mixed with ZnO has a negative zeta potential. Therefore, in one embodiment of the present invention, a green phosphor prepared by mixing or coating Zn₂SiO₄:Mn with the metal oxide as described above can have a zeta potential of the same polarity as the red phosphor and the blue phosphor, and specifically can have a positive zeta potential.

Specifically, the red phosphor, the green phosphor, and the blue phosphor may have substantially the same zeta potentials by controlling the content of the metal oxide. In this regard, the wording 'substantially the same zeta potentials' can refer to a zeta potential having substantially the same operational effect as the zeta potential of the red phosphor and the blue phosphor, that is, about 40 mV. For example, the substantially the same zeta potential may be in a range of about 20 mV to about 60 mV. However, the zeta potential value according to the current embodiment may differ according to a phosphor material and an additive. That is, a phosphor layer according to the present invention is not limited to 40 mV or a specific value within the zeta potential ranging from 20 mV to 60 nm causing the same operational effect as the zeta potential of 40. The present invention can be applied to any plasma display panel that includes a plurality of phosphor layers individually disposed and having the same polarity, specifically a positive zeta potential.

A method of preparing the green phosphor layer 225b will now be described in more detail.

A source of a metal oxide selected from MgO, SrO, CaCO₃, BaCO₃, La₂O₃, or a mixture thereof, that is, a metal salt is dissolved in a solvent and then mixed with Zn₂SiO₄:Mn. In this regard, the amount of the metal oxide may be in the range from 0.1 to 5 parts by weight based on 100 parts by weight of Zn₂SiO₄:Mn. The solvent may be pure water or selected from the group consisting of alcohols, ethers, esters, and a mixture thereof. Specifically, the solvent may be 2-methoxyethanol, 2-ethoxyethanol, or the like.

In one embodiment, when the amount of the metal oxide mixed is less than 0.1 parts by weight or greater than 5 parts by weight, based on 100 parts by weight of Zn₂SiO₄:Mn, zeta potentials of the red phosphor of the red phosphor layer 225a and the blue phosphor of the phosphor layer 225c may be substantially deviated from about 40 mV and thus, discharge cells respectively including the phosphors of the phosphor layers have different discharge characteristics and different lifetimes.

In one embodiment, the mixture is filtered, the solvent used is separated from the mixture, and then the resultant mixture is dried and sintered at a temperature ranging from 250°C to 700°C. The sintering time may be in the range from 1 to 10 hours, and may differ according to the sintering process. In one embodiment, when the sintering temperature is less than 250, the metal salt may incompletely decompose and thus brightness may be decreased, or the metal salt may be incompletely oxidized and thus the metal oxide may not be formed. In another embodiment, when the sintering temperature is greater than 700°C, a phosphor material may react with the metal oxide and thus, charging properties may not be improved.

The sintered product is heat treated at a temperature ranging from 500°C to 900°C to obtain a green phosphor, that is, a mixture of Zn₂SiO₄:Mn and the metal oxide. The heat treatment is performed to compensate for a decrease in brightness of the green phosphor that has been oxidized due to the sintering process. Accordingly, the heat treatment may be performed in reducing conditions. For example, the heat treatment may be performed in an inert gas atmosphere, such as H₂ gas, N₂ gas, or a mixture thereof. The heat treatment may be performed in a temperature ranging from 500°C to 900°C. In one embodiment, when the heat treatment is performed at a temperature lower than 500°C, Mn in the green phosphor may be insufficiently reduced and thus, a decrease in brightness may not be compensated. On the other hand, in another embodiment, when the heat treatment is performed at a temperature higher than 900°C, the phosphor may react with the metal oxide and thus, charging properties may not be improved.

The green phosphor obtained as described above may be a powder phase, and the average particle diameter may be in the range from 10 nm to 10 µm. The green phosphor prepared by mixing or coating Zn₂SiO₄:Mn with the metal oxide has a positive zeta potential. The green phosphor prepared as described above is coated on a discharge cell to form the green phosphor layer 225b. The green phosphor layer 225b has a zeta potential of the same polarity as the red phosphor layer 225a and blue phosphor layer 225c, that is, a positive zeta potential. Therefore, the red, green, and blue phosphor layers 225a, 225b, and 225c have a uniform discharge characteristic. Also, damages on a phosphor layer due to non-uniform discharge characteristics are prevented (or reduced) and thus, the red, green, and blue phosphor layers 225a, 225b, and 225c may have uniform lifetimes.

The phosphor layer 225 can be positioned in each of the discharge cells 226 in the following manner. A phosphor paste is prepared, the phosphor paste is coated on the inner walls of the discharge cells 226, and the coated phosphor paste is dried and sintered. The phosphor paste can be prepared by mixing and stirring respective phosphors described above with a binder resin and a solvent.

For example, to form the red phosphor layer 225a, (Y,Gd)BO₃:Eu, or Y(V,P)O₄:Eu acting as a red phosphor is mixed and stirred with a binder resin and a solvent to prepare a paste. The paste is coated on the discharge cells 226 and the coated paste is dried at a temperature ranging from 120°C to 140°C and sintered at a temperature ranging from about 200°C to 600°C for a time ranging from 1 to 4 hours to form the red phosphor layer 225a. To form the blue phosphor layer 225c, BaMgAl₁₀O₁₇:Eu, or CaMgSi₂O₆:Eu is used as a blue phosphor to prepare a paste and then the obtained paste can be used to form the blue phosphor layer 225c. However, to form the green phosphor layer 225b, Zn₂SiO₄:Mn is mixed or coated with a metal oxide selected from the group consisting of MgO, SrO, CaCO₃, BaCO₃, La₂O₃, and a mixture thereof is used, and then a binder resin and a solvent are mixed therewith to prepare a paste, and then the paste is used to form the green phosphor layer 225b. Therefore, the phosphors of the red phosphor layer 225a, the green phosphor layer 225b, and the blue phosphor layer 225c have zeta potentials of the same polarity, that is, a positive zeta potential.

The binder resin can be a cellulose-based resin, an acryl-based resin, or a mixture thereof. The cellulose-based resin can be methyl cellulose, ethyl cellulose, propyl cellulose, hydroxy methyl cellulose, hydroxy ethyl cellulose, hydroxy propyl cellulose, hydroxy ethyl propyl cellulose, or a mixture thereof. The acryl-based resin can be poly methyl metacrylate; poly isopropyl metacrylate; poly isobutyl metacrylate; a copolymer of an acryl-based monomer, such as methyl meta acrylate, ethyl meta acrylate, propyl meta acrylate, butyl meta acrylate, hexyl meta acrylate, 2-ethyl hexyl meta acrylate, benzyl meta acrylate, dimethyl amino ethyl meta acrylate, hydroxy ethyl meta acrylate, hydroxy propyl meta acrylate, hydroxy butyl meta acrylate, phenoxy 2-hydroxy propyl meta acrylate, glycidyl meta acrylate, methyl acrylate, ethyl acrylate, propyl acrylate, butyl acrylate, hexyl acrylate, 2-ethyl hexyl acrylate, benzyl acrylate, dimethyl amino ethyl acrylate, hydroxy ethyl acrylate, hydroxy propyl acrylate, hydroxy butyl acrylate, phenoxy 2-hydroxy propyl acrylate, or glycidyl acrylate; or a mixture thereof. In some cases, the pastes may further include an inorganic binder in a small amount. Specifically, the amount of the binder resin may be in the range from 2 to 8 parts by weight based on 100 parts by weight of the phosphor paste.

The solvent can be selected from the group consisting of alcohols, ethers, esters, and a mixture thereof. Specifically, the solvent can be butyl cellosolve (BC), butyl carbitol acetate (BCA), terpineol, or a mixture thereof. When the amount of the solvent is too large or too small, the paste may have insufficient flowability, and thus, it may be difficult to prepare the phosphor layer. In consideration of these problems described above, the amount of the solvent may be in the range from 25 to 75 parts by weight based on 100 parts by weight of the paste.

The paste may further include other suitable additives to improve flowability and processability. Such additives can be selected from the group consisting of a photosensitizer such as benzophenone, a dispersing agent, a silicon-based antifoaming agent, a leveling agent, a plasticizer, an antioxidant, and a combination thereof. These additives are commercially and widely available as known by one skilled in the pertinent art.

The coating method, the drying or sintering time and temperature, the binder resin, the solvent, and the additive may not be limited to those described above, and the method described above does not limit the present invention.

Referring to FIG. 1, the discharge cells 226 are filled with a discharge gas. The discharge gas may be a Ne-Xe gaseous mixture including from 5% to 10% of Xe. In some cases, some Ne can be substituted with He.

Hereinafter, preparation examples for preparing a green phosphor which forms the green phosphor layer 225b and an experiment for identifying a zeta potential of the prepared green phosphor will be described in more detail.

In the current preparation example, the red phosphor layer 225a and the blue phosphor layer 225c include a phosphor having a zeta potential of about 40 mV, and a green phosphor is prepared using Zn₂SiO₄:Mn as a phosphor material such that a positive zeta potential has substantially the same operational effect as when the zeta potential is about 40 mV. Specifically, in one embodiment, each of (Y,Gd)BO₃:Eu, Y(V,P)O₄:Eu, BaMgAl₁₀O₁₇:Eu, and CaMgSi₂O₆:Eu has a zeta potential of about 40 mV, and thus each of the red phosphor layer 225a including (Y,Gd)BO₃:Eu or Y(V,P)O₄:Eu used as a red phosphor, the blue phosphor layer 225c including BaMgAl₁₀O₁₇:Eu used as a blue phosphor, and the green phosphor layer 225 including CaMgSi₂O₆:Eu used as a green phosphor has a zeta potential of about 40 mV.

In addition, in the current experimental example, the zeta potential of the green phosphor prepared as described is measured and the results are identified. Therefore, the green phosphor layer 225b including the green phosphors prepared according to the preparation examples has the same polarity as the red phosphor layer 225a and the blue phosphor layer 225c, that is, a positive zeta potential.

### Green Phosphor Preparation Example 1

First, magnesium salt was mixed with a solvent. Here, the amount of the magnesium salt was controlled such that the amount of MgO was set to 2 parts by weight based on 100 parts by weight of Zn₂SiO₄:Mn. The solvent used was 2-ethoxyethanol. The mixture was filtered to separate the 2-ethoxyethanol from the mixture. The resultant mixture was dried and sintered at 525°C for 1 hour. The sintered product was heat treated in a reducing atmosphere including 5% of H₂ and 95% of N₂ at 600°C for 1 hour. As a result, a green phosphor powder that is Zn₂SiO₄:Mn mixed or coated with MgO was obtained.

### Green Phosphor Preparation Example 2

A green phosphor was prepared in the same (or substantially the same) manner as in Example 1 except that strontium salt was used instead of the magnesium salt. As a result, a green phosphor powder that is Zn₂SiO₄:Mn mixed or coated with SrO was obtained.

### Green Phosphor Preparation Example 3

A green phosphor was prepared in the same (or substantially the same) manner as in Example 1 except that calcium carbonate salt was used instead of the magnesium salt. As a result, a green phosphor powder that is Zn₂SiO₄:Mn mixed or coated with CaCO₃ was obtained.

### Green Phosphor Preparation Example 4

A green phosphor was prepared in the same (or substantially the same) manner as in Example 1 except that barium carbonate salt was used instead of the magnesium salt. As a result, a green phosphor powder that is Zn₂SiO₄:Mn mixed or coated with BaCO₃ was obtained.

### Green Phosphor Preparation Example 5

A green phosphor was prepared in the same (or substantially the same) manner as in Example 1 except that lanthanum salt was used instead of the magnesium salt. As a result, a green phosphor powder that is Zn₂SiO₄:Mn mixed or coated with La₂O₃ was obtained.

### Green Phosphor Preparation Example 6

A green phosphor was prepared in the same (or substantially the same) manner as in Example 5 except that the amount of the lanthanum salt was controlled such that the amount of La₂O₃ was set to 0.5 parts by weight based on 100 parts by weight of Zn₂SiO₄:Mn. As a result, a green phosphor powder that is Zn₂SiO₄:Mn mixed or coated with La₂O₃ in an amount of 0.5 parts by weight based on 100 parts by weight of Zn₂SiO₄:Mn was obtained.

### Green Phosphor Preparation Example 7

A green phosphor was prepared in the same (or substantially the same) manner as in Example 5 except that the amount of the lanthanum salt was controlled such that the amount of La₂O₃ was set to 1 part by weight based on 100 parts by weight of Zn₂SiO₄:Mn. As a result, a green phosphor powder that is Zn₂SiO₄:Mn mixed or coated with La₂O₃ in an amount of 1 part by weight based on 100 parts by weight of Zn₂SiO₄:Mn was obtained.

### Green Phosphor Preparation Example 8

A green phosphor was prepared in the same (or substantially the same) manner as in Example 5 except that the amount of the lanthanum salt was controlled such that the amount of La₂O₃ was set to 1.5 parts by weight based on 100 parts by weight of Zn₂SiO₄:Mn. As a result, a green phosphor powder that is Zn₂SiO₄:Mn mixed or coated with La₂O₃ in an amount of 1.5 parts by weight based on 100 parts by weight of Zn₂SiO₄:Mn was obtained.

### Green Phosphor Preparation Example 9

A green phosphor was prepared in the same (or substantially the same) manner as in Example 5 except that the amount of the lanthanum salt was controlled such that the amount of La₂O₃ was set to 2.5 parts by weight based on 100 parts by weight of Zn₂SiO₄:Mn. As a result, a green phosphor powder that is Zn₂SiO₄:Mn mixed or coated with La₂O₃ in an amount of 2.5 parts by weight based on 100 parts by weight of Zn₂SiO₄:Mn was obtained.

### Green Phosphor Preparation Example 10

A green phosphor was prepared in the same (or substantially the same) manner as in Example 5 except that the amount of the lanthanum salt was controlled such that the amount of La₂O₃ was set to 3.0 parts by weight based on 100 parts by weight of Zn₂SiO₄:Mn. As a result, a green phosphor powder that is Zn₂SiO₄:Mn mixed or coated with La₂O₃ in an amount of 3.0 parts by weight based on 100 parts by weight of Zn₂SiO₄:Mn was obtained.

### Reference Example

As a reference example, a green phosphor was prepared by only using Zn₂SiO₄:Mn which acted as the phosphor, that is, not with the metal oxide.

### Comparative Example

A green phosphor was prepared in the same (or substantially the same) manner as in Example 1 except that zinc salt was used instead of the magnesium salt. As a result, a green phosphor powder that is Zn₂SiO₄:Mn mixed or coated with ZnO was obtained.

### Experimental Example 1

Zeta potentials of the green phosphors prepared according to Reference Example, Comparative Example, and Examples 1 to 5 were measured. Each of the green phosphors was mixed with pure water and dispersed for 2 minutes using supersonic waves. Then, respective zeta potentials were measured five times using a zeta potential measuring device and respective average values were obtained.

The results are shown in Table 1. Referring to Table 1, the green phosphors prepared by mixing Zn₂SiO₄:Mn with MgO, SrO, CaCO₃, BaCO₃, La₂O₃ show positive zeta potentials. However the green phosphor which includes only Zn₂SiO₄:Mn acting as a base phosphor shows a negative zeta potential of -29.85 mV and the green phosphor prepared by mixing the base phosphor with other metal oxide, that is, ZnO shows a negative zeta potential of -10.26 mV.

Accordingly, when a red phosphor is (Y,Gd) BO₃:Eu or Y(V,P)O₄:Eu and a blue phosphor is BaMgAl₁₀O₁₇:Eu or CaMgSi₂O₆:Eu, and a green phosphor is Zn₂SiO₄:Mn mixed with La₂O₃, those three kinds of phosphors show zeta potentials of the same polarity and the zeta potentials are very close to each other. Thus, these three kinds of phosphors can have a uniform discharge characteristic and a uniform lifetime.

**Table 1**

| | Zeta Potential (mV) |
|---|---|
| Reference Example | -29.85 |
| Comparative Example | -10.26 |
| Example 1 | 31.76 |
| Example 2 | 22.54 |
| Example 3 | 12.35 |
| Example 4 | 24.51 |
| Example 5 | 46.04 |

### Experimental Example 2

In the current experimental example, a change in a zeta potential according to the amount of a metal oxide used was measured. The green phosphors prepared according to Examples 5 to 10 were measured. The method of measuring the zeta potential was the same (or substantially the same) as in Experimental Example 1.

Referring to Table 2, green phosphors that is Zn₂SiO₄:Mn mixed or coated with La₂O₃ in an amount ranging from 1.5 to 2.0 parts by weight, that is, the green phosphors prepared according to Examples 5 and 8 show zeta potentials that are closest to the zeta potential value of about 40 mV, which is the zeta potential of the red phosphor and the blue phosphor. That is, it can be seen that the three kinds of phosphors can have identical (or substantially identical) zeta potentials by controlling the amount of a metal oxide.

**Table 2**

| | Zeta Potential (mV) |
|---|---|
| Example 6 | 12.07 |
| Example 7 | 21.03 |
| Example 8 | 37.28 |
| Example 5 | 46.04 |
| Example 9 | 52.31 |
| Example 10 | 57.07 |

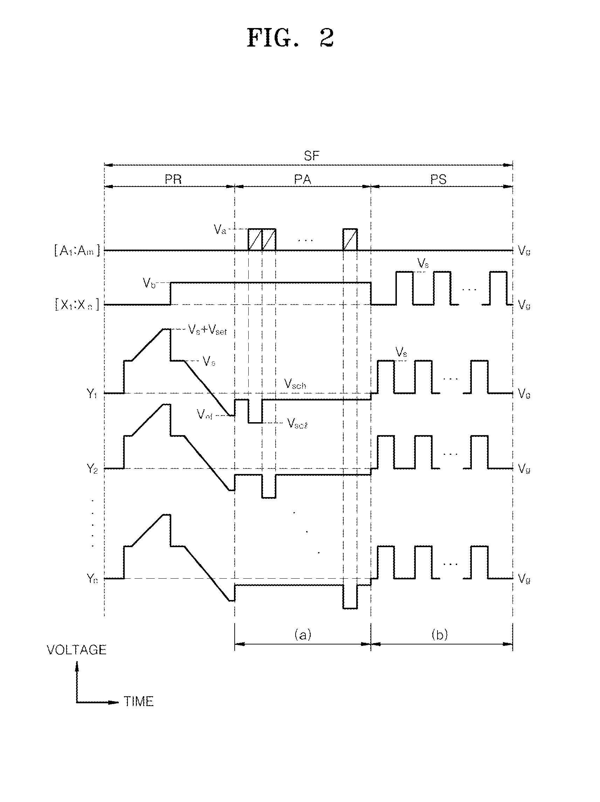

Hereinafter, with reference to FIGS. 2-4, it is derived (or shown) that, in a plasma display panel according to an embodiment of the present invention, a uniform discharge characteristic and a uniform lifetime can be obtained using phosphors of the phosphor layers having zeta potentials of the same polarity.

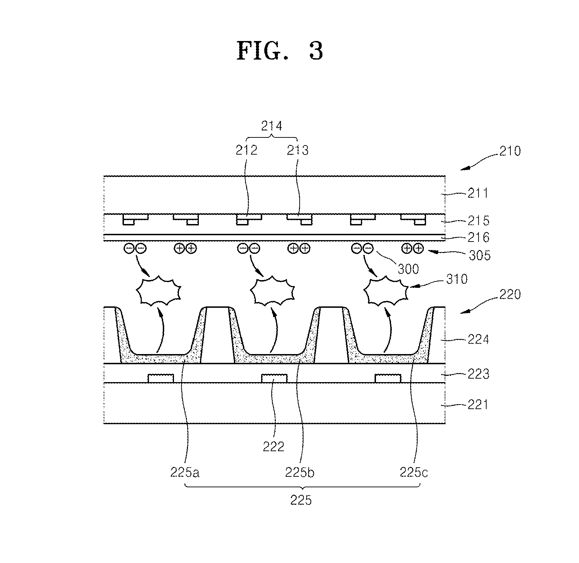

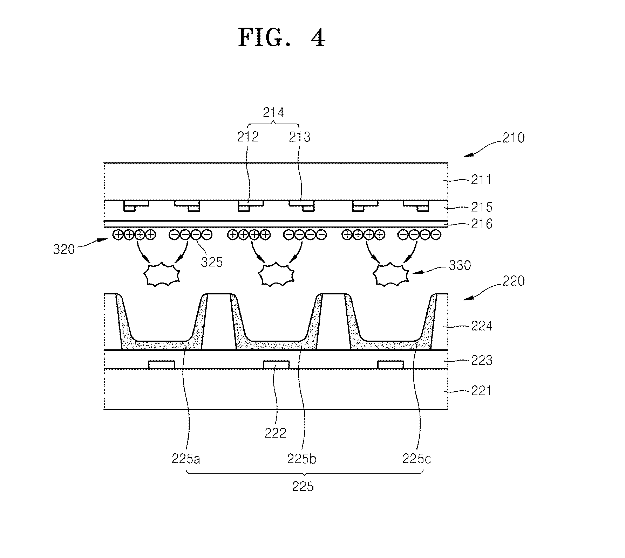

FIG. 2 is a timing diagram illustrating a method of driving a plasma display panel according to an embodiment of the present invention, FIG. 3 is a cross-sectional schematic view of a plasma display panel to explain discharging in section (a) of FIG. 2, and FIG. 4 is a cross-sectional schematic view of a plasma display panel to explain discharging in section (b) of FIG. 2.

A plasma display panel displays an image in a frame unit, and the frame is divided into a plurality of sub fields. Each sub field includes a reset period (PR) for initiating a state of a discharge cell, an address period (PA) for selectively generating an address discharge in a discharge cell to display, and a sustain period (PS) for generating a sustain discharge in the selected discharge cell. In some cases, the PR may be omitted.

Specifically, during the reset period (PR), a voltage applied to sustain and address electrodes is maintained constant and a reset pulse is applied to a scan electrode to control the amount of wall charges.

During the address period (PA), a scan pulse is sequentially applied to the scan electrode, and an address pulse is applied to an address electrode of the discharge cell to display. Therefore, the resultant voltage difference is combined with a voltage difference caused by wall charges formed by the reset pulse, thereby causing an address discharge. In this regard, the scan pulse has a waveform that a scan high voltage (Vsch) is maintained constant, and a scan low voltage (Vscl) is applied corresponding to the address pulse, and the address pulse has a waveform that a data voltage (Va) is applied corresponding to the scan pulse.

FIG. 3 is a sectional schematic view of the plasma display panel of FIG. 1 in which a cross-sectional schematic view of the front panel 210 is obtained by cutting the plasma display panel of FIG. 1 in an X direction and a cross-sectional schematic view of the rear panel 220 is obtained by cutting the plasma display panel of FIG. 1 in a Y direction. Hereinafter, an address discharge will be described in more detail with reference to FIG. 3. Like reference numerals illustrated in FIG. 3 are the same as like reference numerals illustrated in FIG. 1 and thus, constituting elements of FIG. 3 will not be described again in more detail. Referring to FIG. 3, when negative wall charges 300 and positive wall charges 305 are respectively formed on the scan electrodes 212 and the sustain electrodes 213 during the reset operation, a data voltage is applied to the address electrodes 222 and a scan low voltage is applied to the scan electrodes 212, thereby causing an address discharge 210 at the scan electrodes 212 and the address electrodes 222. When a data voltage is applied to the address electrodes 222, discharge cells in which the phosphor layer 225 is positioned may retain a uniform discharge characteristic since the red phosphor layer 225a, the green phosphor layer 225b, and the blue phosphor layer 225c includes phosphors having zeta potentials of the same polarity. In addition, a difference in lifetimes due to different discharge characteristics of the phosphors of the red, green, and blue phosphor layers 225a, 225b, and 224c can be prevented (or reduced).

Specifically, since the data voltage has a positive (+) polarity, the phosphor layer 225 disposed on the address electrodes 222 can be designed to have a positive zeta potential so as to easily cause an address discharge.

Referring to FIG. 2, when a sustain pulse is alternatively applied to the scan and sustain electrodes of all discharge cells during the sustain period PS, a sustain discharge occurs only in a discharge cell in which an address discharge has occurred. With reference to FIG. 4, the sustain discharge will now be described in more detail. Since wall discharges 320 and 325 have been increased in a discharge cell in which an address discharge has occurred, a sequential application of a voltage (or a predetermined voltage) to the sustain and scan electrodes leads to a surface discharge 330 between the sustain electrodes and the scan electrodes. In this regard, positive charges caused by the sustain discharge may damage the phosphor layer 225. Therefore, when the phosphor layer 225 has a positive zeta potential, the phosphor layer 225 may be less damaged by the positive charges than when the phosphor layer 225 has a negative zeta potential.

According to an embodiment of the present invention, a phosphor layer is positioned in each of a plurality of discharge cells, and the phosphors of the phosphor layers disposed in the discharge cells have the zeta potential of the same polarity. Therefore, the phosphors of the phosphor layers have a uniform discharge characteristic and a uniform lifetime. That is, when an address discharge or a sustain discharge occurs in the discharge cells, non-uniformity of discharge characteristics of the phosphors of the phosphor layers due to a difference in polarity can be prevented (or reduced). Furthermore, a difference in lifetime due to different discharge characteristics of the phosphors of the phosphor layers can also be prevented (or reduced).

Also, when the phosphor layers have a positive zeta potential, an address discharge can easily occur. This is because the address discharge is caused by applying a positive voltage to an address electrode disposed below the phosphor layers and applying a negative voltage to a scan electrode corresponding to the address electrode. In addition, when a sustain discharge occurs by alternatively applying a voltage to a scan electrode and a sustain electrode, damage caused by positive charges can be decreased because the phosphor layers have a positive zeta potential.

Specifically, in one embodiment of the invention, the phosphor layers have substantially the same zeta potential ranging from about 20 mV to about 60 mV, and thus, a uniform discharge characteristic and a uniform lifetime can be obtained.

While the present invention has been described in connection with certain exemplary embodiments, it is to be understood that the invention is not limited to the disclosed embodiments, but, on the contrary, is intended to cover various modifications and equivalent arrangements included within scope of the appended claims.

## Claims

1. A plasma display panel comprising:
a first substrate (211);
a second substrate (221) facing the first substrate (211);
a plurality of barrier ribs (224) dividing a discharge space between the first and second substrates (211, 221) to form a plurality of discharge cells (226);
pairs of scan and sustain electrodes (212, 213) to which a voltage is alternatively applied to cause a sustain discharge in the discharge cells (226);
a plurality of address electrodes (222) for causing an address discharge together with the scan electrodes (212) in the discharge cells (226);
a phosphor layer (225) in each of the discharge cells (226); and
a discharge gas in the discharge cells (226), wherein
the phosphor layers (225) in the discharge cells (226) have zeta potentials of the same polarity.

2. The plasma display panel of claim 1, wherein the same polarity is a positive zeta potential.

3. The plasma display panel of claim 1 or 2, wherein the phosphor layer (225) in each of the discharge cells (226) is above the address electrode (222).

4. The plasma display panel of any one of the preceding claims, wherein the address discharge occurs when a positive voltage is applied to the address electrodes (222) and a negative voltage is applied to the scan electrodes (212).

5. The plasma display panel of any one of the preceding claims, configured such that the phosphor layer (225) in each of the discharge cells (226) is exposed to the sustain discharge.

6. The plasma display panel of any one of the preceding claims, wherein the discharge cells (226) comprise:
a first discharge cell in which a green phosphor layer (225b) for emitting green light is positioned,
a second discharge cell in which a blue phosphor layer (225c) for emitting blue light is positioned, and
a third discharge cell in which a red phosphor layer (225a) for emitting red light is positioned.

7. The plasma display panel of claim 6, wherein the green, blue and red phosphor layers (225b, 225c, 225a) have zeta potentials of the same polarity by controlling the type or content of metal oxide coated on or mixed with a main phosphor material.

8. The plasma display panel of claim 6 or 7, wherein the green phosphor layer (225b) comprises a mixture of Zn₂SiO₄:Mn with a metal oxide selected from the group consisting of MgO, SrO, CaCO₃, BaCO₃, La₂O₃ and a mixture thereof.

9. The plasma display panel of claim 8, where the amount of the metal oxide is from 0.1 to 5 parts per weight based on 100 parts by weight of Zn₂SiO₄:Mn.

10. The plasma display panel of any one of the preceding claims, wherein the zeta potentials of the phosphor layers (225) are in the range 20mV to 60mV.
